# EUROPÄISCHE PATENTSCHRIFT

(11) **EP 1 717 005 B1**
(45) Veröffentlichungstag und Bekanntmachung des Hinweises auf die Patenterteilung: **22.07.2009**
(21) Anmeldenummer: 06111151.4
(22) Anmeldetag: 15.03.2006
(51) Int. Cl.: B29C 41/18, B29C 41/22, B29C 41/50

(54) **Verfahren zur Herstellung von mehrfarbigen Kunststoff-Formhäuten**
Method of producing multicolour plastic skins
Procédé de fabrication de peaux multicolores en matière synthétique.

(30) Priorität: 29.04.2005 DE 102005020493
(43) Veröffentlichungstag der Anmeldung: 02.11.2006
(73) Patentinhaber: Benecke-Kaliko AG, 30419 Hannover (DE)
(72) Erfinder: Jakoby, Hans Bernd, 31547, Rehburg-Loccum (DE); André, Walter, 29699, Bomlitz (DE)
(74) Vertreter: Finger, Karsten

(56) Entgegenhaltungen:
- EP-A- 0 451 558
- US-A- 5 395 578
- US-A- 6 071 619
- PATENT ABSTRACTS OF JAPAN Bd. 1997, Nr. 03, 31. März 1997 (1997-03-31) & JP 08 290433 A (KASAI KOGYO CO LTD), 5. November 1996 (1996-11-05)
- PATENT ABSTRACTS OF JAPAN Bd. 014, Nr. 379 (M-1012), 16. August 1990 (1990-08-16) & JP 02 141213 A (INOUE MTP CO LTD), 30. Mai 1990 (1990-05-30)

## Beschreibung

Die Erfindung betrifft ein Verfahren zur Herstellung von mehrfarbigen Kunststoff-Formhäuten, insbesondere für Kraftfahrzeugteile wie z.B. Armaturenbretter und Türverkleidungen, nach dem Oberbegriff des Anspruchs 1.

Verfahren zur Herstellung zweifarbiger Slushhäute mit der "Maskentechnik" sind bekannt.

Die EP 0 972 625 A1 beschreibt hierzu eine Einrichtung, nämlich eine Werkzeugform zur Herstellung von zweifarbigen Kunststoff-Formhäuten für Kraftfahrzeugteile, d.h. im Wesentlichen Armaturenbretter, Türverkleidungen etc. Das hier angewandte Herstellungsverfahren zur Erzeugung von Sinterfolien / Slushhäuten ist ein Rotationssintern, bei dem sich ein Kunststoffpulver in der rotierenden Werkzeugform befindet und an entsprechend geheizten Wandteilen der Werkzeugform anschmilzt.

Die hier gezeigte Einrichtung weist zwei verschiedene untere Teile der Werkzeugformkästen auf. Die unteren Teile der Werkzeugformkästen, welche jeweils auch das Pulverbett beinhalten, sind lösbar angeordnet in Bezug auf den einzigen oberen Werkzeugformkasten, an welchen das Kunststoffpulver anschmilzt. Für die Herstellung von zweifarbigen Kunststoff-Formhäuten weist nun der erste untere Formkasten einen schalenförmige und in den Innenraum ragenden Vorsprung auf, mit dem - wie mit einer Maske - Teile des oberen Formkastens abgedeckt werden.

In einem ersten Arbeitsgang wird durch Rotationssintern ein Pulver einer ersten Farbe angeschmolzen, wobei die unter der schalenförmigen Abdeckung liegenden Bereiche des oberen Formkastens nicht getroffen werden und somit frei von Pulver bleiben.

Vor einem zweiten Arbeitsgang wird der erste untere Formkasten durch einen zweiten unteren Formkasten ersetzt, der ein Pulver einer anderen Farbe beinhaltet und keine Abdeckungen aufweist. Beim nachfolgend wiederholten Rotationssintern schmilzt an dem vorher freigehaltene Bereich des oberen Formkastens und auf der Rückseite der schon bestehenden Formhaut das Pulver mit der neuen Farbe an. Nach Abkühlung und Entnahme der Formhaut aus dem Werkzeug erhält man auf der dem Werkzeug zugewandten und zukunftigen Außenseite eine zweifarbige Kunststoff-Formhaut.

Während des ersten Arbeitsschrittes muß die hierzu die schalenförmige und in den Innenraum ragende Abdeckung des unteren Formkasten sorgsam gegenüber dem oberen Formkasten abgedichtet werden, damit kein Sinterpulver der ersten Farbe in den Abdeckbereich gelangt. Hierzu weist der schalenförmige Vorsprung an seine Rändern Dichtungselemente auf, die elastisch und oder/innen hohl ausgebildet sind und ggf. innen mit Druck oder elastischen Medien beaufschlagt werden können.

Von Nachteil ist hierbei der hohe Arbeitsaufwand zum Wechsel der unteren Kastenformen sowie die schwierige Dichtung der Maske, d.h. der Dichtung zwischen den Rändern der schalenförmigen und in den Innenraum ragenden Abdeckung des unteren Formkasten und der Innenseite des oberen Formkastens. Hierbei führen Wärmedehnungen und unterschiedliche und durch komplizierte Innenformen des oberen Formkastens bedingte Druckverhältnisse der Dichtungen zu Undichtigkeiten und unregelmäßiger Anlage, wodurch die Farbgrenzen verwischen können.

Die US 5,234,653 beschreibt ein Verfahren zur Herstellung von mehrfarbigen Kunststoff-Formhäuten durch Sintern, bei dem sich ein Kunststoffpulver in einer durch Trennwände aufgeteilten Werkzeugform befindet und an entsprechend geheizten Wandteilen der Werkzeugform anschmilzt. Die Fixierung der Trennwände erfolgt dabei über Drucksysteme innerhalb der Trennwände. Durch das Drucksystem werden die Trennwände mit Hilfe von Dichtungsprofilen zwischen unterer und obere Werkzeugform verspannt und sorgen so für eine sichere Abdichtung bei den jeweiligen Sintervorgängen mit unterschiedlichen Farbpulvern.

Auch hier besteht ein Nachteil darin, dass eine relativ umständliche Fixierung der Trennwände vorgenommen werden muß und zusätzlich eine hohe Druckkraft für die Drucksysteme erforderlich ist.

Weitere solche Verfahren sind aus der JP-A-08 290 433 und der US-A-5 395 578 bekannt.

Der Erfindung lag also die Aufgabe zugrunde, eine Verfahren zur Herstellung von zweifarbigen Kunststoff-Formhäuten mittels Pulversintern bereitzustellen, mit welcher eine Abdeckung oder Maske leicht aufzubringen und zu entfernen ist, die eine exakte Farbtrennung ohne Verwischen der einzelnen Farb-Bereiche sicherstellt, und die für verschiedene Verfahren der Sintertechnik angepaßt werden kann.

Gelöst wir diese Aufgabe durch die Merkmale des Hauptanspruchs. Vorteilhafte Weiterbildungen sind in den Unteransprüchen erfasst.

Hierbei wird mindestens einer der durch die Stege begrenzten Bereiche der Oberfläche während eines Anschmelzen von Kunststoffpulver einer Farbe mit einer Abdeckung oder Maske versehen, die in ihren Randbereichen mit einer Dichtung versehen ist und auf den Stegen aufliegt, wobei in den abgedeckten und durch Stege begrenzten Bereichen der Oberfläche ein Überdruck erzeugt wird

Hierdurch erreicht man eine exakte Farbtrennung ohne Verwischen der einzelnen Farb-Bereiche und vermeidet das bei den Sinterverfahren, die ja mit dem Aufbringen von Pulver arbeiten, übliche Einbrechen und Verlaufen von Pulveranhäufungen. Bei den bisher bekannten Verfahren baut sich nämlich an den Rändern von Abdeckschalen eine Häufung der Pulverschüttung und somit eine Vedickung der Pulverschicht auf, die nach Abheben der Abdeckung in Richtung auf die abgedeckten Bereiche einbricht und den Farbverlauf verwischt. Bei dem Erfindungsgemäßen Verfahren strömt Druckmedium durch den Dichtungsspalt in Richtung auf die nicht abgedeckten Bereiche und verhindert so den Aufbau von solchen Verdickungen. Hierdurch vermeidet man natürlich auch sicher das Eindringen von Pulverpartikeln in die abgedeckten Bereiche.

Gemäß der Erfindung werden die Dichtungen hohl ausgebildet und mit Innendruck beaufschlagt . Ein solche Maßnahme kann allein oder als Unterstützung zur Innendruckbeaufschlagung der abgedeckten Bereiche sinnvoll sein, um die Dichtwirkung zu verstärken oder zu steuern.

Gemäß der Erfindung wird ein Druckmedium über Druckaustrittsöffnungen der Dichtungen in Richtung auf die Stege geleitet. Die Dichtungen weisen hierzu Druckaustrittsöffnungen in Richtung der Stege auf. Hierdurch wird sowohl ein Austreten von Dichtmedium über den Dichtungsspalt erreicht, wodurch der Aufbau von Pulverschüttungen verringert wird, als auch die Erzeugung eines Überdrucks im den abgedeckten und durch Stege begrenzten Bereich der Oberfläche.

Eine weitere vorteilhafte Ausbildung besteht darin, dass die Abdeckung oder Maske so aufgelegt wird, dass sie mit ihren Randbereichen auf den Stegen aufliegt, wobei die Randbereiche der Abdeckung die Stege in Richtung der nicht abgedeckten Bereiche der Oberfläche mit einem Überstand überragen.

Eine vorteilhafte Ausbildung besteht darin, dass der Überstand in allen Richtungen zwischen 1 und 5 mm, vorzugsweise 2 mm beträgt. Dies ist ein Überstand, der mit den üblichen Siebverteilungen / Körnergrößen der Sinterpulver die bisher besten Ergebnisse liefert.

Die Dichtungen sind vorteilhafterweise aus dauerelastischem und temperaturfestem Material hergestellt, vorzugsweise aus Polyurethan oder Silikonkautschuk. Hierdurch erreicht man auch über eine lange Anwendungszeit und thermische Wechselbelastungen eine saubere Kantenbildung zwischen den einzelnen Farb- bzw. Sinterbereichen.

Die Abmessungen der Abdeckungen oder Masken sind so ausgelegt, dass sie eine Wärmedehnung des mit Stegen versehenen Formwerkzeuges kompensieren. Bei den für den Sinterprozeß erforderlichen Temperaturen von 180 bis 250° C machen sich die durch Wärmeübergang nachfolgenden Dehnungen der Randbereiche der Abdeckungen stark bemerkbar und führen zu Undichtigkeiten, wenn nicht eine solche Kompensationsmaßnahme gleich bei der Konstruktion der Abdeckungen vorgesehen wird.

Eine besonders vorteilhafte Verwendung des Verfahrens ergibt sich bei der Herstellung von Kunststoff-Formhäuten durch Sprühsintern. Bei Sprühverfahren ergibt sich nämlich durch den bei den verwendeten Sprühdüsen entstehenden "Overspray", d.h. den sich bildenden Sprühnebel-Kegel, eine besonders ausgeprägte Pulverschüttung und Vedickung der Pulverschicht an den Randbereichen der Abdeckung, die nun durch die erfindungsgemäße Vorrichtung in ihren schädlichen Wirkungen reduziert werden kann.

Eine ebenso vorteilhafte Verwendung der Verfahrens ergibt sich für die für die Herstellung von Kunststoff-Formhäuten durch Rotationssintern, da es durch in den Randbereiche von Stegen oder Abdeckung entstehende Stau-Wärme ebenfalls zu erhöhter ausgeprägte Pulveransammlung und Vedickung der Pulverschicht kommen kann.

Anhand eines einer Vorrichtung zur Ausführung des Verfahrens soll die Erfindung näher erläutert werden. Es zeigen
- Fig. 1: einen Randbereich einer auf einem Trennsteg aufliegenden Abdeckung der erfindungsgemäßen Vorrichtung
- Fig. 2: einen Querschnitt durch eine Dichtung des Randbereiches

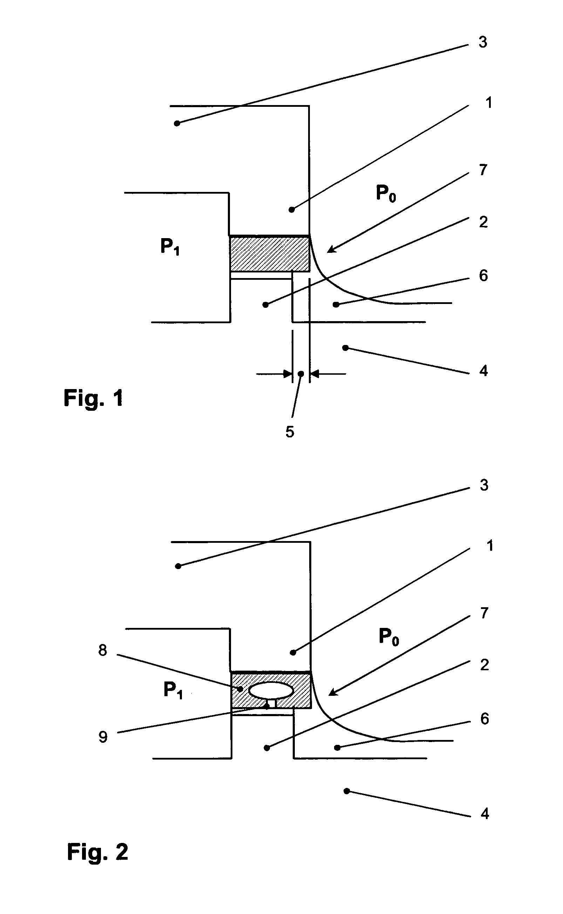

Die Figur 1 zeigt einen Randbereich 1 einer auf einem Trennsteg 2 aufliegenden Abdeckung oder Maske 3 einer erfindungsgemäßen Vorrichtung. Der Trennsteg 2 befindet sich dabei in der Oberfläche eines Formwerkzeuges 4. Der Randbereich 1 der Abdeckung 3 überragt den Trennstege 2 in Richtung der nicht abgedeckten Bereiche der Oberfläche mit einem Überstand 5. Der abgedeckte Bereich wird dabei mit dem Druck P₁ beaufschlagt, während außerhalb der Abdeckung der niedrigere Umgebungsdruck P₀ herrscht.

Beim Sinterverfahren, d.h. beim Aufschmelzen eine Pulverschicht 6 baut sich an den Rändern der Abdeckung 3 ein Häufung der Pulverschüttung und somit eine Vedickung 7 der Pulverschicht 6 auf, die nach Abheben der Abdeckung in Richtung auf die nicht abgedeckten Bereiche einbricht. Bei der hier gezeigten Vorrichtung kann dies aber nicht zu einem Verwischen des Farbverlaufes führen, da die Verdickung durch den durch den Dichtspalt strömenden Überdruck P₁ im Wesentlichen verhindert wird und lediglich in die vorher "freigehaltenen" Bereiche des Überstandes 5 kippen kann.

Figur 2 zeigt dieselbe Vorrichtung mit einem Querschnitt durch eine hohl ausgebildete und mit Innendruck beaufschlagte Dichtung 8, wodurch die Dichtwirkung verstärkt oder gesteuert werden kann.

Die Dichtung weist dabei Druckaustrittsöffnungen 9 in Richtung des Steges 2 auf. Hierdurch wird sowohl ein Austreten von Dichtmedium über den Dichtungsspalt erreicht, wodurch der Aufbau von Pulverschüttungen ebenso verringert wird, wie auch die Erzeugung eines Überdrucks im den abgedeckten und durch Stege begrenzten Bereich der Oberfläche.

### Bezugszeichenliste

(Teil der Beschreibung)
- 1: Randbereich
- 2: Trennsteg
- 3: Maske oder Abdeckung
- 4: Formwerkzeug
- 5: Überstand
- 6: Pulverschicht
- 7: Verdickung
- 8: Dichtung
- 9: Druckaustrittsöffnung

## Patentansprüche

1. Verfahren zur Herstellung von mehrfarbigen Kunststoff-Formhäuten, insbesondere für Kraftfahrzeugteile wie z.B. Armaturenbretter und Türverkleidungen, wobei die Kunststoff-Formhäute im Sinterverfahren durch ein nacheinander erfolgendes mehrfaches kontinuierliches Anschmelzen von Kunststoffpulver verschiedener Farbe an einer Oberfläche eines erwärmten Formwerkzeuges aufgebaut werden, wobei die mit Kunststoffpulver unterschiedlicher Farbe versehenen / gesinterten Bereiche der Oberfläche des Formwerkzeugs durch Vorsprünge oder Stege auf der Oberfläche voneinander getrennt sind, wobei mindestens einer der durch die Stege begrenzten Bereiche der Oberfläche während eines Anschmelzen von Kunststoffpulver einer Farbe mit einer Abdeckung oder Maske versehen wird, die in ihren Randbereichen mit einer Dichtung versehen ist und auf den Stegen aufliegt, wobei in den abgedeckten und durch Stege begrenzten Bereichen der Oberfläche ein Überdruck erzeugt wird, wobei die Dichtungen hohl ausgebildet sind und mit Innendruck beaufschlagt werden, **dadurch gekennzeichnet, dass** ein Druckmedium über Druckaustrittsöffnungen der Dichtungen in Richtung auf die Stege geleitet wird.

2. Verfahren nach Anspruch 1, durch **gekennzeichnet**, dass die Abdeckung so auf die Stege aufgelegt wird, dass die Randbereiche der Abdeckung die Stege in Richtung der nicht abgedeckten Bereiche der Oberfläche mit einem Überstand überragen..

3. Verfahren nach Anspruch 1 oder 2, durch **gekennzeichnet**, dass der Überstand in allen Richtungen zwischen 1 und 5 mm, vorzugsweise 2 mm beträgt.

4. Verwendung des Verfahrens nach Anspruch 1 bis 3 für die Herstellung von Kunststoff-Formhäuten durch Sprühsintern.

5. Verwendung des Verfahrens nach Anspruch 1 bis 3 für die Herstellung von Kunststoff-Formhäuten durch Rotationssintern.

## Claims

1. Method for manufacturing multicoloured slush skins, in particular for parts of a motor vehicle, such as for example dashboards and door trim, the slush skins being built up in a sintering process by continuously and repeatedly making polymer powder of different colours begin to melt successively on a surface of a heated mould, the regions of the surface of the mould that are sintered/provided with polymer powder of different colours being separated from one another by projections or fins on the surface, at least one of the regions of the surface that are bounded by the fins being provided with a covering or mask while polymer powder of one colour is made to begin melting, said covering or mask being provided with a seal in its edge regions and resting on the fins, a positive pressure being produced in the regions of the surface that are covered and bounded by fins, the seals being of a hollow form and being subjected to internal pressure, **characterized in that** a pressure medium is directed via the pressure outlet openings of the seals in the direction of the fins.

2. Method according to Claim 1, **characterized in that** the covering is placed on the fins in such a way that the edge regions of the covering protrude beyond the fins in the direction of the non-covered regions of the surface with an overhang.

3. Method according to Claim 1 or 2, **characterized in that** the overhang is between 1 and 5 mm, preferably 2 mm, in all directions.

4. Use of the method according to Claims 1 to 3 for manufacturing slush skins by spray sintering.

5. Use of the method according to Claims 1 to 3 for manufacturing slush skins by rotational sintering.

## Revendications

1. Procédé de fabrication de peaux moulées en matière synthétique polychrome, en particulier pour pièces de véhicules automobiles, par exemple tableaux de bord et habillages de portes,
les peaux moulées en matière synthétique étant obtenues par une opération de frittage en continu par plusieurs fusions successives de poudres de matière synthétique de différentes couleurs à la surface d'un outil de moulage chauffé, les parties de la surface de l'outil de moulage dotées de poudres frittées de matière synthétique de différentes couleurs étant séparées les unes des autres à la surface par des saillies ou nervures,
au moins une des parties de la surface délimitées par les nervures étant dotée lors de la fusion de poudre de matière synthétique d'une couleur d'un recouvrement ou masque dont les bordures sont dotées d'un joint d'étanchéité et qui repose sur les nervures, une surpression étant formée dans les parties de la surface recouvertes et délimitées par les nervures, les joints d'étanchéité étant creux et une pression interne pouvant y être appliquée,
caratcérisé en ce que
un fluide sous pression étant amené en direction des nervures par les ouvertures de sortie de pression des joints d'étanchéité.

2. Procédé selon la revendication 1, **caractérisé en ce que** le recouvrement est placé sur les nervures de telle sorte que les bordures du recouvrement débordent des nervures avec un débord en direction des parties non recouvertes de la surface.

3. Procédé selon la revendication 1 ou 2, **caractérisé en ce que** la distance de débord est comprise entre 1 et 5 mm et est de préférence de 2 mm dans toutes les directions.

4. Utilisation du procédé selon les revendications 1 à 3 pour la fabrication de peaux moulées en matière synthétique par frittage par pulvérisation.

5. Utilisation du procédé selon les revendications 1 à 3 pour la fabrication de peaux moulées en matière synthétique par frittage par rotation.
